# EUROPÄISCHE PATENTSCHRIFT

(11) **EP 1 820 984 B1**
(45) Veröffentlichungstag und Bekanntmachung des Hinweises auf die Patenterteilung: **30.06.2010**
(21) Anmeldenummer: 07002387.4
(22) Anmeldetag: 03.02.2007
(51) Int. Cl.: F16C 29/06, F16C 29/12

(54) **Linearmodul mit separaten Umlaufeinheiten**
Linear module with separate rolling element units
Module linéaire doté d'unités rotatives séparées

(30) Priorität: 15.02.2006 DE 102006007067
(43) Veröffentlichungstag der Anmeldung: 22.08.2007
(73) Patentinhaber: ROBERT BOSCH GMBH, 70469 Stuttgart (DE)
(72) Erfinder: Königer, Berthold, 97440 Werneck-Mühlhausen (DE); Keller, Bernhard, 97535 Wasserlosen-Kaisten (DE)
(74) Vertreter: Maiß, Harald

(56) Entgegenhaltungen:
- EP-A- 0 351 499
- DE-U1- 8 807 631
- DE-U1- 20 220 727
- US-A1- 2004 071 373

## Beschreibung

Die vorliegende Erfindung betrifft eine Linearführungsvorrichtung mit einer sich in einer Führungsrichtung erstreckenden Führungsschiene und einem auf der Führungsschiene mittels wenigstens zwei Wälzkörperumläufe in Führungsrichtung verschiebbar geführten Führungswagen, wobei die Wälzkörperumläufe einen Umlaufkanal und eine Mehrzahl von in dem Umlaufkanal umlaufenden Wälzkörpern umfassen, wobei der Umlaufkanal einen Laufkanal umfasst, der zum einen von einer an der Führungsschiene ausgebildeten Wälzkörperiaufbahn und zum anderen von einem lastaufnehmenden Wandungsabschnitt des Führungswagens begrenzt ist, und ferner einen Rückführkanal und zwei den Laufkanal mit dem Rückführkanal verbindende Umlenkkanäle umfasst, in denen die Wälzkörper im Wesentlichen lastfrei sind, und wobei der Führungswagen eine Basiseinheit und wenigstens zwei Umlaufbaugruppen umfasst.

Eine derartige Linearführungseinrichtung ist beispielsweise bereits aus der DE 102 37 278 A1 bekannt. Hierbei sind zwei als Kunststoff-Spritzgussteil ausgeführte Umlaufbaugruppen auf die Basiseinheit des Führungswagens aufgesteckt und an jedem Ende des Führungswagens durch eine Endplatte miteinander verbunden. Die Endplatte enthält einerseits Umlenkeinsätze, die aufgrund der Herstellung der Umlaufbaugruppen durch Spritzgießen nicht integral mit den Umlaufbaugruppen bereitgestellt werden können. Andererseits erfolgt die kraftübertragende Befestigung der Umlaufbaugruppen an der Basiseinheit des Führungswagens mittels der Endplatte. Diese bekannte Linearführungseinrichtung hat den Nachteil, dass für Führungswagen mit unterschiedlicher Breite zwar die Umlaufbaugruppen unverändert verwendet werden können, aber für jede Breite eine angepasste Endplatte bereitgestellt werden muss.

Bereits an dieser Stelle sei darauf hingewiesen, dass der Inhalt der DE 102 37 278.0 , sowie der unter Inanspruchnahme der Priorität dieser deutschen Patentanmeldung eingereichten US-Anmeldung Seriennr. 10/638,756 zur Ergänzung der Offenbarung der vorliegenden Anmeldung, insbesondere hinsichtlich des grundlegenden Aufbaus des Führungswagens, hiermit ausdrücklich in Bezug genommen wird.

Zwar wird bei den aus dem Katalog "Linearführungen, Profilschienenführungen, Laufrollenführungen, Wellenführungen", Druckschrift LIF der Firma INA, Seiten 166 bis 169 bekannten Linearführungseinrichtungen versucht, dieses Problem zu lösen. Die dort verwendeten Umlaufbaugruppen weisen allerdings den Nachteil auf, dass sie, um eine genügend stabile Führung bereitzustellen, zum einen aus Stahl gefertigt sind und zum anderen die Befestigung dieser Stahl-Umlaufbaugruppen an der Basiseinheit durch aufwendig zu montierende Schraubbolzen bewerkstelligt wird.

Demgegenüber Ist es Aufgabe der vorliegenden Erfindung, eine gattungsgemäße Linearführungsvorrichtung dahingehend zu verbessern, dass sie einfach an Führungswagen unterschiedlicher Breite und Länge angepasst werden kann, aber weiterhin eine kostengünstige Herstellbarkeit und einen einfachen Aufbau der Umlaufbaugruppen und des Führungswagens bietet.

Diese Aufgabe wird erfindungsgemäß durch eine Linearführungsvorrichtung der gattungsgemäßen Art gelöst, bei welcher die beiden Umlaufbaugruppen voneinander getrennt ausgebildet und miteinander nur über die Basiseinheit verbunden sind und dass am Führungswagen wenigstens vier Ausnehmungen vorgesehen sind, welche jeweils eine zur Führungsrichtung im Wesentlichen orthogonal verlaufende Stirnfläche aufweisen, an der eine der Umlaufbaugruppen in Führungsrichtung abgestützt ist, wobei die Stirnflächen von zwei an jeweils einer Seite der Führungsschiene angeordneten Ausnehmungen in entgegengesetzte Richtungen weisen.

Durch das Bereitstellen der Ausnehmungen kann sich die Umlaufbaugruppe der erfindungsgemäßen Linearführungseinrichtung in Führungsrichtung an den an der Basiseinheit augebildeten Stirnflächen abstützen, so dass die Kraftübertragung zwischen der Umlaufbaugruppe und der Basiseinheit vorzugsweise im Wesentlichen vollständig über diese flächige Abstützung erfolgen kann. Somit ist es nicht notwendig, eine für eine Kraftübertragung geeignete und damit konstruktiv zwangsläufig aufwändige Befestigung der Umlaufbaugruppe an der Basiseinheit bereitzustellen.

Gemäß Vorstehendem wird verglichen mit dem Stand der Technik erfindungsgemäß unter einer "Basiseinheit" der Führungswagen ohne Umlaufbaugruppen und stirnseitige Endplatten verstanden. Nicht zuletzt auf Grund dieser Tatsache sind die Umiaufbaugruppen unmittelbar an der Basiseinheit befestigt.

Bei einer Ausführungsform der vorliegenden Erfindung können die Ausnehmungen an beiden Enden der Basiseinheit vorgesehen sein, was eine besonders einfache Herstellung der Basiseinheit ermöglicht.

Zusätzlich oder alternativ kann aber auch wenigstens eine Ausnehmung in einem im Wesentlichen mittleren Bereich der Basiseinheit vorgesehen sein. Dabei können beispielsweise am Führungswagen mehrere, in Führungsrichtung hintereinander angeordnete Umlaufbaugruppen vorgesehen sein, so dass die Umlaufbaugruppen der erfindungsgemäßen Linearführungseinrichtung auch bei Führungswagen unterschiedlicher Länge verwendet werden können.

Gemäß einer weiteren Fortbildung des Erfindungsgegenstands sind die Umlaufbaugruppen zumindest teilweise aus Kunststoff gefertigt, vorzugsweise spritzgegossen. Die Umlaufbaugruppe kann hierbei einen aus Metall gefertigten lastaufnehmenden Wandungsabschnitt des Laufkanals umfassen, der sich an der Basiseinheit des Führungswagens abstützt, so dass trotz einer Herstellung der Umlaufbaugruppe als Kunststoffteil eine stabile Ausbildung und Abstützung des Laufkanals bereitgestellt werden kann.

Für eine besonders einfache Befestigung der Umlaufbaugruppe an der Basiseinheit kann vorgesehen sein, dass jede Umlaufbaugruppe mehrere Befestigungsdorne aufweist, die in Öffnungen der Basiseinheit eingreifen und deren Endbereiche zum Vernieten der Umlaufgruppe mit der Basiseinheit verformbar sind. Vorzugsweise sind hierbei die Befestigungsdorne aus Kunststoff gebildet.

Um die Herstellung der Umlaufbaugruppe beispielsweise durch Spritzgießen vereinfachen zu können, kann vorgesehen sein, dass jede Umlaufbaugruppe ein Hauptteil und zwei Umlenkeinsätze umfasst.

Hierbei stützt sich vorzugsweise jeder der Umlenkeinsätze in Führungsrichtung zum einen an der Stirnfläche der Basiseinheit und zum anderen an einem Befestigungsdorn und/oder einer Abschlusswandung des Hauptteils der Umlaufbaugruppe ab, wodurch eine gute Fixierung der Umlenkeinsätze an dem Hauptteil erreicht wird.

Weitere Merkmale und Vorteile der vorliegenden Erfindung werden aus der folgenden detaillierten Beschreibung zusammen mit den beigefügten Zeichnungen ersichtlich, wobei:
- Fig. 1: eine perspektivische Ansicht eines Führungswagens einer Linearführungseinrichtung gemäß einer ersten Ausführungsform der vorliegenden Erfindung ist;
- Fig. 2: eine Explosionsdarstellung des Führungswagens aus Fig. 1 ist;
- Fig. 3: eine Stirnansicht der Linearführungseinrichtung der ersten Ausführungsform der Erfindung ist;
- Fig. 4: eine perspektivische Ansicht des Führungsgehäuses der Linearführungseinrichtung der Fig. 1 - 3 ist;
- Fig. 5: eine weitere perspektivische Ansicht des Führungswagens gemäß der ersten Ausführungsform der Erfindung ist;
- Fig. 6: eine perspektivische Ansicht eines Führungswagens gemäß einer zweiten Ausführungsform der vorliegenden Erfindung ist; und
- Fig. 7: eine Schnittansicht einer Linearführungseinrichtung ist, die die erfindungsgemäße Abstützung des Wälzkörper-Laufkanals an der Basiseinheit des Führungswagens zeigt.

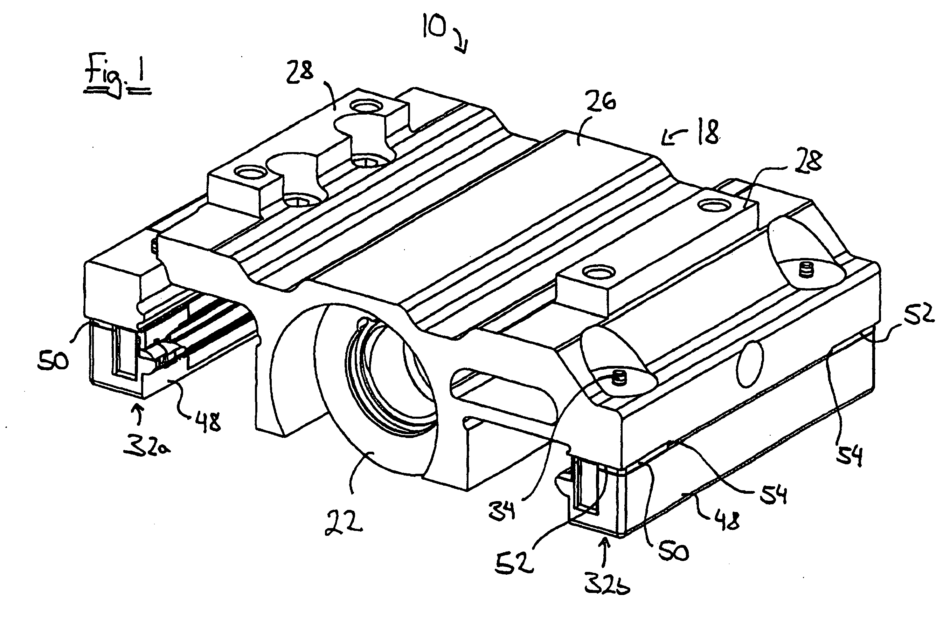

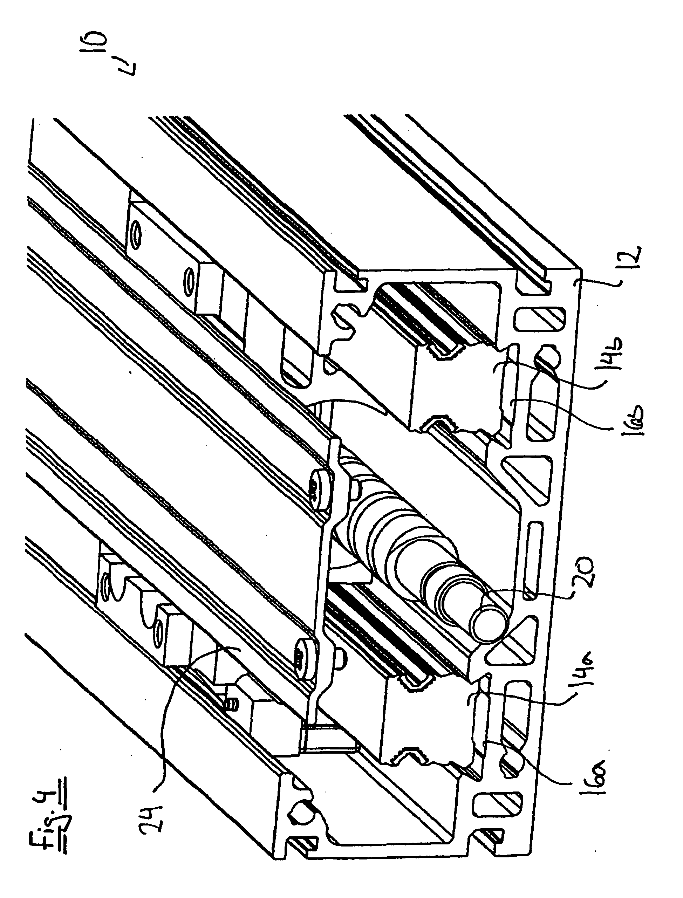

Zunächst wird die in den Fig. 1 bis 5 gezeigte erste Ausführungsform der vorliegenden Erfindung erläutert.

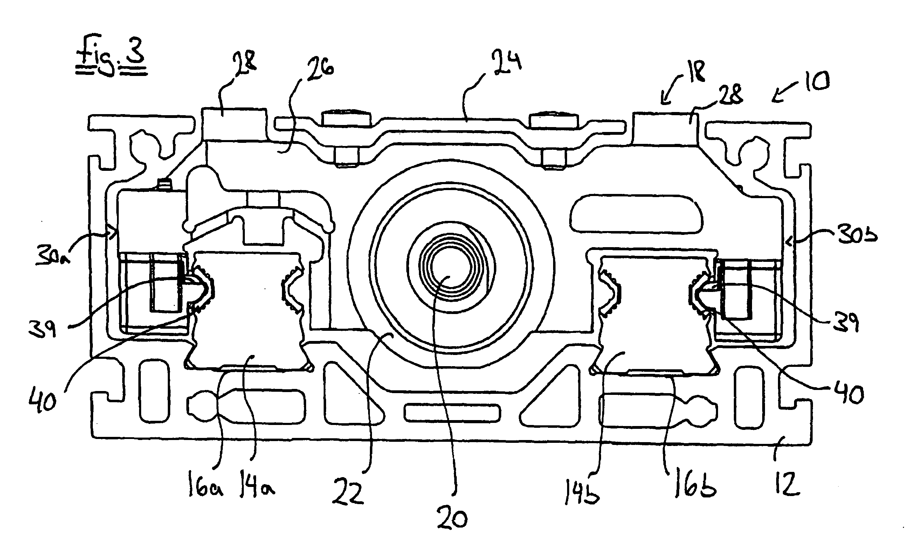

Wie aus Fig. 3 ersichtlich, umfasst eine Linearführungsvorrichtung 10 ein Führungsgehäuse 12, in dem zwei Führungsschienen 14a und 14b dadurch befestigt sind, dass ein Schwalbenschwanzfuß der Führungsschienen 14a und 14b in jeweiligen Nuten 16a und 16b im Führungsgehäuse 12 verstemmt sind. Zum Antrieb eines im Führungsgehäuse 12 in einer Führungsrichtung geführten Führungswagens 18 ist eine Gewindespindel 20 im Führungsgehäuse 12 drehbar gelagert. Eine am Führungswagen 18 befestigte Gewindemutter 22 steht hierbei mit der Gewindespindel 20 in Eingriff. Am Führungsgehäuse 12 ist weiterhin eine Abdeckplatte 24 befestigt.

Der Führungswagen 18 umfasst eine üblicherweise aus beispielsweise Aluminium, insbesondere einem Aluminium-Strangpressprofil, gebildete Basiseinheit 26, die mit Aufsätzen 28 zur Befestigung eines durch die Linearführungsvorrichtung 10 zu bewegenden Objekts versehen ist, und Schenkel 30a, 30b, die jeweils eine zugeordnete Führungsschiene 14a, 14b seitlich umgreifen und an dieser Führungsschiene geführt sind.

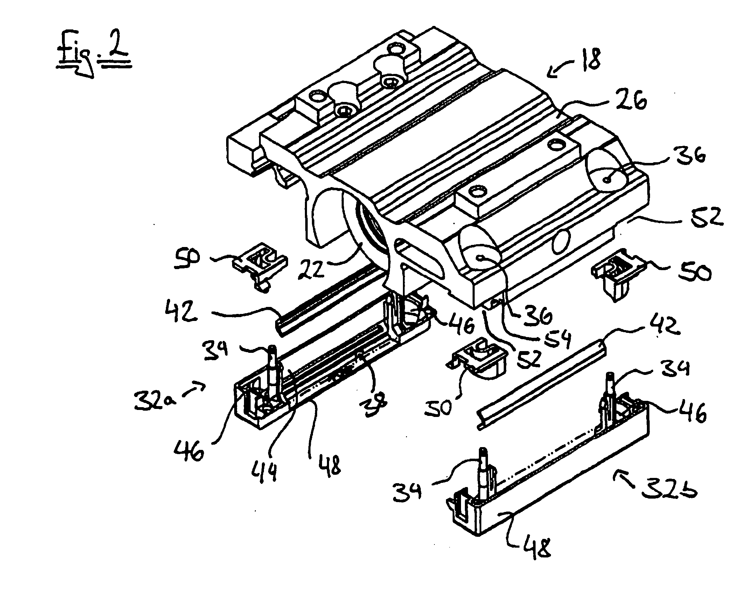

Jeder der Schenkel 30a, 30b des Führungswagens 18 umfasst hierbei eine Wälzkörper-Umlaufbaugruppe 32a, 32b, wobei jede Umlaufbaugruppe 32a, 32b mittels zweier Befestigungsdorne 34 (siehe Fig. 1 und 2) mit der Basiseinheit 26 vernietet ist, indem die Befestigungsdorne 34 durch Öffnungen 36 in der Basiseinheit 26 geführt werden und das herausstehende Ende der Befestigungsdorne 34 verformt wird.

Der Führungswagen 18 und insbesondere die Umlaufbaugruppen 32a, 32b sind erfindungsgemäß derart ausgebildet, dass die Umlaufbaugruppen 32a, 32b als vormontierte Einheiten bereitgestellt werden können, in denen bereits die zur Führung des Führungswagens 12 auf der Führungsschiene 14 dienenden (in Fig. 1 bis 5 nicht gezeigten) Wälzkörper aufgenommen sind. Jede Umlaufbaugruppe 32a, 32b umfasst ein vorzugsweise als Kunststoff-Spritzgussteil gefertigtes Hauptteil 48, an dem ein wannenförmiges Element 42 durch Verrasten befestigt ist, und zwei Umlenkeinsätze 50, die derart in das Hauptteil eingesetzt sind, dass sie sich an einer Abschlusswandung des Hauptteils 48 und an dem integral mit dem Hauptteil 48 ausgebildeten Befestigungsdorn 34 abstützen.

Die Wälzkörper laufen in einem Wälzkörper-Umlaufkanal 38 um, der von einem Laufkanal 39, einem Rückführkanal und zwei Umlenkkanälen gebildet ist. Der Laufkanal 39 ist zwischen dem Führungswagen 18 und den Führungsschienen 14a, 14b ausgebildet und wird auf der Seite der Führungsschienen 14a, 14b jeweils von einer Lauffläche 40 und auf der Seite des Führungswagens 18 von einem lastaufnehmenden Abschnitt eines wannenförmigen Elements 42 begrenzt. In dem in der Umlaufbaugruppe 32a, 32b ausgebildeten Rückführkanal 44 laufen die Wälzkörper lastfrei zum Beginn des Laufkanals 39 zurück. In der Umlaufbaugruppe 32a, 32b ausgebildete Umlenkkanäle 46 verbinden den Laufkanal 39 und den Rückführkanal 44 an beiden Längsenden.

Wie insbesondere in Fig. 2 dargestellt, sind an dem Hauptteil 48 der Umlaufbaugruppe 32a, 32b jeweils untere Wandungsabschnitte des Rückführkanals 44 und der beiden Umlenkkanäle 46 ausgebildet. Zusammen mit einem in Fig. 2 als Strichpunkt-Linie angedeuteten Stahldraht werden die Wälzkörper damit durch die Umlaufbaugruppe 32a, 32b so umschlossen, dass die Umlaufbaugruppe 32a, 32b als Korb bzw. Schale wirkt, aus der die Wälzkörper nicht herausfallen.

Das wannenförmige Element 42 ist vorzugsweise aus Stahl hergestellt, sodass es den auf seine lastaufnehmende Wandung einwirkenden Beanspruchungen ohne Weiteres standhalten kann. In dem mit der Basiseinheit 26 zusammengefügten Zustand stützt sich das wannenförmige Element 42 mit seiner Rückseite unmittelbar an der Basiseinheit 26 ab. Auf diese Weise können die aufzunehmenden Kräfte des lasttragenden Laufkanals 39 unmittelbar an die Basiseinheit 26 weitergeleitet werden.

An den Enden der Basiseinheit 26 sind insgesamt vier Ausnehmungen 52 gebildet, deren Stirnflächen 54 jeweils im Wesentlichen orthogonal zur Führungsrichtung verlaufen. Wie insbesondere aus Fig. 1 und 2 ersichtlich, stützen sich die Umlaufbaugruppen 32a, 32b jeweils über ihre Umlenkeinsätze 50 an den Stirnflächen 54 derart ab, dass in Führungsrichtung oder entgegen der Führungsrichtung wirkende Kräfte über diese flächige Abstützung direkt von den Umlaufbaugruppen 32a, 32b auf die Basiseinheit 26 übertragen werden können.

Diese Ausbildung ermöglicht, dass bei der erfindungsgemäßen Linearführungseinrichtung 10 zumindest teilweise als Kunststoff-Spritzgussteil gefertigte Umlaufbaugruppen 32a, 32b ohne Zwischenschaltung einer Endplatte direkt an der Basiseinheit 26 des Führungswagens 18 befestigt werden können, da durch die Abstützung der Umlaufbaugruppen 32a, 32b an den Stirnflächen 54 der Ausnehmungen 52 eine stabile Kraftübertragung zwischen den Umlaufbaugruppen 32a, 32b und der Basiseinheit 26 erreicht wird, ohne dass die Befestigung der Umlaufbaugruppen 32a, 32b an der Basiseinheit 26 mittels der Befestigungsdorne 34 belastet wird.

Daher können bei der Linearführungseinrichtung der vorliegenden Erfindung die gleichen Spritzguss-Hauptteile 48 und wannenförmigen Elemente 42 der Umlaufbaugruppen 32a, 32b verwendet werden, die bereits beispielsweise für aus der DE 102 37 278 A1 bekannte Linearführungseinrichtungen verwendet werden. Nur die Umlenkeinsätze 50 der erfindungsgemäßen Umlaufbaugruppen 32a, 32b müssen gegenüber den aus der DE 102 37 278 A1 bekannten, dort jeweils über eine Endplatte mit integrierten Umlenkeinsätzen miteinander verbundenen, Umlaufbaugruppen abgeändert werden, so dass der Herstellungsaufwand der erfindungsgemäßen Umlaufbaugruppen 32a, 32b minimiert ist.

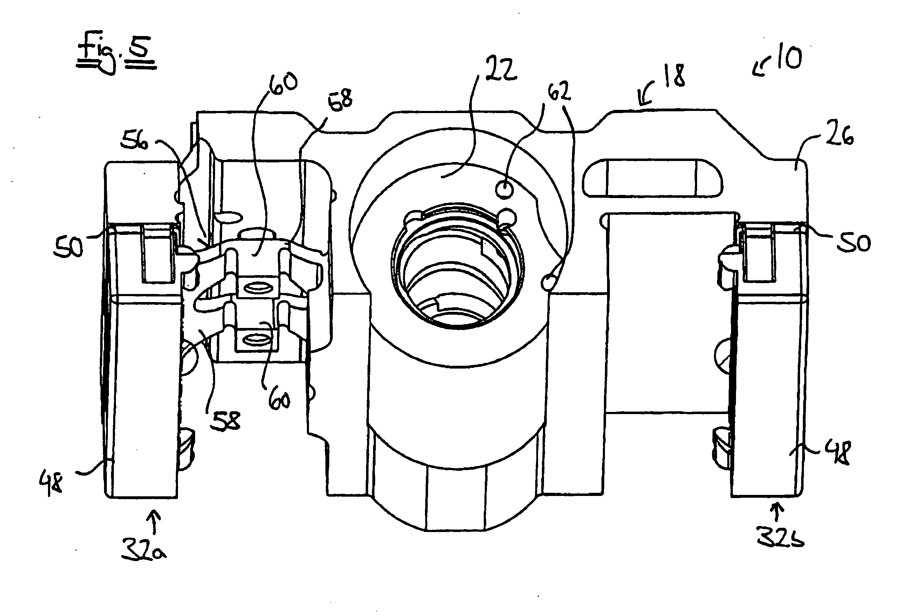

Einem Schenkel 30a des Führungswagens 18 ist weiterhin eine Vorspannungseinsteüeinrichtung 56 zugeordnet (Fig. 5). Diese Vorspannungseinstelleinrichtung 56 umfasst mehrere integral mit der Basiseinheit 26 des Führungswagens 18 ausgebildete Kniehebel 58. Eine nicht dargestellte Verstellschraube stützt sich an der Basiseinheit 26 des Führungswagens 18 ab und greift in ein Gewinde in einem Angriffsteil 60 des Kniehebels 58 ein, so dass durch Drehen der Verstellschraube die Vorspannung der Schenkel 30a, 30b gegen die Führungsschienen 14a, 14b einstellbar ist.

Wie aus Fig.5 ersichtlich, sind an der Stirnseite der Gewindemutter 22 zwei Bohrungen 62 ausgebildet, in die ein entsprechend geformtes Werkzeug eingreifen kann, um die Gewindemutter 22 mit ihrem (nicht gezeigten) Außengewinde in das (nicht gezeigte) Gewinde der Basiseinheit 26 einzuschrauben.

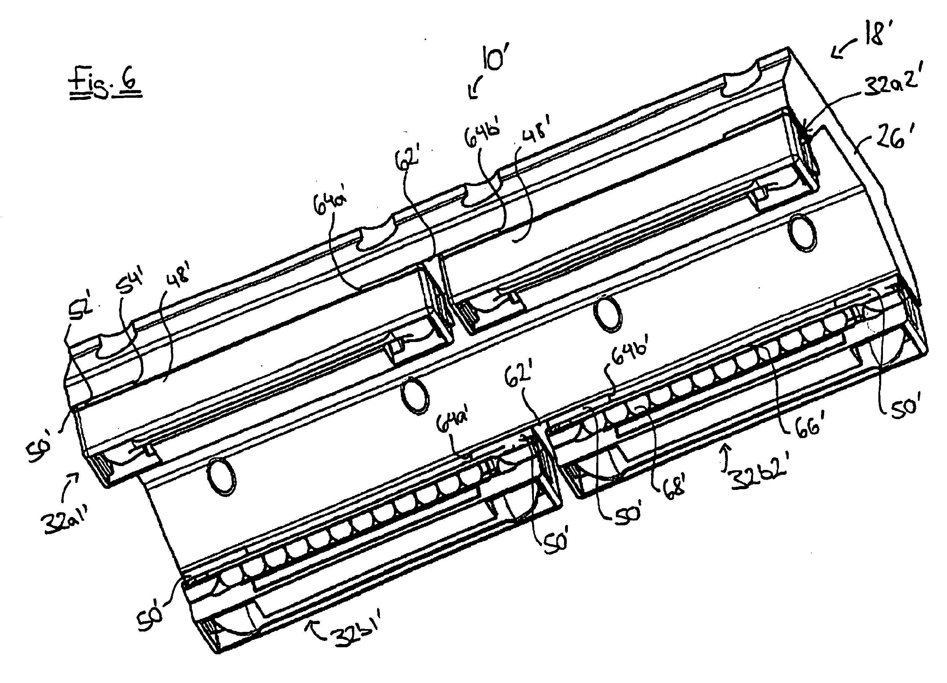

Fig. 6 zeigt eine zweite Ausführungsform der vorliegenden Erfindung, bei der in Führungsrichtung jeweils an jeder Seite der Basiseinheit 26' zwei Umlaufbaugruppen 32a1', 32a2', 32b1', 32b2' vorgesehen sind. Um die Umlaufbaugruppen 32a1', 32a2', 32b1', 32b2' jeweils sowohl in Führungsrichtung als auch entgegengesetzt zur Führungsrichtung abzustützen, ist an jeder Seite der Basiseinheit 26' eine zusätzliche, mittlere Ausnehmung 62' mit zwei Stirnflächen 64a', 64b' vorgesehen. Jede Umlaufbaugruppe 32a1', 32a2' 32b1', 32b2' stützt sich somit an ihrer einen Seite an einer Stirnfläche 54' der an einem Ende des Führungswagens 18' angeordneten Ausnehmung 52' ab, und an ihrer anderen Seite an einer Stirnfläche 64a', 64b' der mittleren Ausnehmung 62'. Hierdurch können die Umlaufbaugruppen 32a1', 32a2' 32b1', 32b2' für Führungswagen 18, 18' mit unterschiedlicher Länge oder Breite verwendet werden.

Weiterhin zeigt Fig. 6 einen am Hauptteil 48' der Umlaufbaugruppen 32a1', 32a2' 32b1', 32b2' befestigten Haltebügel 66', der verhindert, dass die Wälzkörper 68' im nicht auf eine Führungsschiene aufgesetzten Zustand des Führungswagens 18' aus dem Laufkanal herausfallen können. Anstelle dieses Haltebügels kann vorgesehen sein, dass der lastaufnehmende Wandungsabschnitt des in jeder Umlaufbaugruppe ausgebildeten LaUfKanals die Wälzkörper auf mehr als der Hälfte ihres Umfangs umschließt.

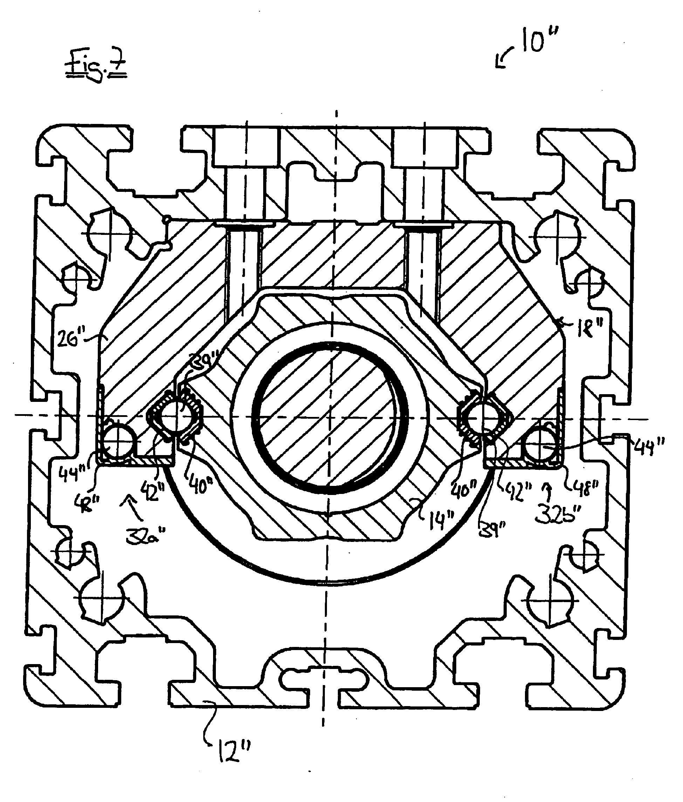

Fig. 7 zeigt einen Querschnitt durch eine Linearführungseinrichtung 10", bei der anstelle der Führungsschiene ein Auslegerelement 14" vom Führungswagen 18" umgriffen wird und dient zur Erläuterung der Abstützung des eine Wandung des lasttragenden Laufkanals 39" bildenden wannenförmigen Element 42" der Umlaufbaugruppen 32a", 32b" an der Basiseinheit 26" des Führungswagens 18". Hierdurch werden die über den Laufkanal zwischen dem Führungswagen 18" und der Führungsschiene 14" übertragenen Kräfte ohne Zwischenschaltung des Hauptteils 48" der Umlaufbaugruppe 32a", 32b" von der Basiseinheit 26" aufgenommen, so dass trotz der Ausbildung des Hauptteils 48" der Umlaufbaugruppen 32a", 32b" als Kunststoffteil eine ausreichend stabile Führung des Führungswagens 18" auf der Führungsschiene 14" sichergestellt ist.

## Patentansprüche

1. Linearführungseinrichtung (10; 10') mit einer sich in einer Führungsrichtung erstreckenden Führungsschiene (14a, 14b) und einem auf der Führungsschiene (14a, 14b) mittels wenigstens **zwei Wälzkörperumläufen** (38; 38', 68') in Führungsrichtung verschiebbar geführten Führungswagen (18; 18'),
wobei **die Wälzkörperumläufe** (38; 38', 68') einen Umlaufkanal (38; 38') und
eine Mehrzahl von in dem Umlaufkanal umlaufenden Wälzkörpern (68') **umfassen,**
wobei der Umlaufkanal einen Laufkanal (39; 39') umfasst, der zum einen von einer an der Führungsschiene ausgebildeten Wälzkörperlaufbahn (40) und zum anderen von einem lastaufnehmenden Wandungsabschnitt (42) des Führungswagens (18) begrenzt ist, und ferner einen Rückführkanal (44) und zwei den Laufkanal (39; 39') mit dem Rückführkanal (44) verbindende Umlenkkanäle (46) umfasst, in denen die Wälzkörper (68') im Wesentlichen lastfrei sind, und
wobei der Führungswagen (18; 18') eine Basiseinheit (26; 26') und wenigstens zwei Umlaufbaugruppen (32a, 32b; 32a1', 32a2', 32b1', 32b2') umfasst, in welchen jeweils wenigstens ein Wälzkörperumlauf aufgenommen ist, und
wobei die beiden Umlaufbaugruppen (32a, 32b; 32a1', 32a2', 32b1', 32b2') voneinander getrennt ausgebildet und miteinander nur über die Basiseinheit (26; 26') verbunden sind und **dadurch gekennzeichnet, dass** am Führungswagen (18; 18') wenigstens vier Ausnehmungen (52; 52', 62') vorgesehen sind, welche jeweils eine zur Führungsrichtung im Wesentlichen orthogonal verlaufende Stirnfläche (54; 54', 64a', 64b') aufweisen, an der eine der Umlaufbaugruppen (32a, 32b; 32a1', 32a2', 32b1', 32b2') in Führungsrichtung abgestützt ist, wobei die Stirnflächen (54; 54', 64a', 64b') von zwei an jeweils einer Seite der Führungsschiene (14a,14b) angeordneten Ausnehmungen (52; 52', 62') in entgegengesetzte Richtungen weisen.

2. Linearführungseinrichtung nach Anspruch 1,
**dadurch gekennzeichnet, dass** die Ausnehmungen (52; 52', 62') an beiden Enden der Basiseinheit (26; 26') vorgesehen sind.

3. Linearführungseinrichtung nach Anspruch 1 oder 2,
**dadurch gekennzeichnet, dass** wenigstens eine Ausnehmung (52', 62') in einem im Wesentlichen mittleren Bereich der Basiseinheit (26') vorgesehen ist.

4. Linearführungseinrichtung nach einem der Ansprüche 1 bis 3,
**dadurch gekennzeichnet, dass** am Führungswagen (18') mehrere, in Führungsrichtung hintereinander angeordnete Umlaufbaugruppen (32a1', 32a2', 32b1', 32b2') vorgesehen sind.

5. Linearführungseinrichtung nach einem der Ansprüche 1 bis 4,
**dadurch gekennzeichnet, dass** die Umlaufbaugruppen (32a, 32b; 32a1', 32a2', 32b1', 32b2') zumindest teilweise aus Kunststoff gefertigt, vorzugsweise spritzgegossen, sind.

6. Linearführungseinrichtung nach einem der Ansprüche 1 bis 5,
**dadurch gekennzeichnet, dass** die Umlaufbaugruppe (32a, 32b; 32a1', 32a2', 32b1', 32b2') einen aus Metall gefertigten lastaufnehmenden Wandungsabschnitt (42) des Laufkanals (39; 39') umfasst.

7. Linearführungseinrichtung nach einem der Ansprüche 1 bis 6,
**dadurch gekennzeichnet, dass** jede Umlaufbaugruppe (32a, 32b; 32a1', 32a2', 32b1', 32b2') mehrere Befestigungsdome (34) aufweist, die in Öffnungen (36) der Basiseinheit (26; 26') eingreifen und deren Endbereiche zum Vernieten der Umlaufgruppe (32a, 32b; 32a1', 32a2', 32b1', 32b2') mit der Basiseinheit (26; 26') verformbar sind.

8. Linearführungseinrichtung nach Anspruch 7,
**dadurch gekennzeichnet, dass** die Befestigungsdorne (34) aus Kunststoff gebildet sind.

9. Linearführungseinrichtung nach einem der Ansprüche 1 bis 8,
**dadurch gekennzeichnet, dass** jede Umlaufbaugruppe (32a, 32b; 32a1', 32a2', 32b1', 32b2') ein Hauptteil (48; 48') und zwei Umlenkeinsätze (50; 50') umfasst.

10. Linearführungseinrichtung nach Anspruch 9,
**dadurch gekennzeichnet, dass** sich jeder der Umlenkeinsätze (50; 50') in Führungsrichtung zum einen an einer Stirnfläche (54; 54', 64a', 64b'), der Basiseinheit (26; 26') und zum anderen an einem Befestigungsdorn (34) und/oder einer Abschlusswandung des Hauptteils der Umlaufbaugruppe (32a, 32b; 32a1', 32a2', 32b1', 32b2) abstützt.

## Claims

1. Linear guide device (10; 10') having a guide rail (14a, 14b) which extends in a guide direction and having a guide carriage (18; 18') which is guided such that it can be displaced in the guide direction on the guide rail (14a, 14b) by means of at least two rolling-body circulating means (38; 38', 68'), the rolling-body circulating means (38; 38', 68') comprising a circulating channel (38; 38') and a plurality of rolling bodies (68') which circulate in the circulating channel,
the circulating channel comprising a running channel (39; 39') which is delimited firstly by a rolling-body raceway (40) which is formed on the guide rail and secondly by a loadbearing wall section (42) of the guide carriage (18), and comprises, furthermore, a return channel (44) and two deflection channels (46) which connect the running channel (39; 39') to the return channel (44) and in which the rolling bodies (68') are substantially load-free, and
the guide carriage (18; 18') comprising a base unit (26; 26') and at least two circulating assemblies (32a, 32b; 32a1', 32a2', 32b1', 32b2'), in which in each case at least one rolling-body circulating means is received, and
the two circulating assemblies (32a, 32b; 32a1', 32a2', 32b1', 32b2') being configured separately from one another and being connected to one another only via the base unit (26; 26'), **characterized in that** at least four recesses (52; 52', 62') are provided on the guide carriage (18; 18'), which at least four recesses (52; 52', 62') have in each case one end face (54; 54', 64a', 64b') which extends substantially orthogonally with respect to the guide direction and on which one of the circulating assemblies (32a, 32b; 32a1', 32a2', 32b1', 32b2') is supported in the guide direction, the end faces (54; 54', 64a', 64b') of two recesses (52; 52', 62') which are arranged on in each case one side of the guide rail (14a, 14b) pointing in opposite directions.

2. Linear guide device according to Claim 1, **characterized in that** the recesses (52; 52', 62') are provided at both ends of the base unit (26; 26').

3. Linear guide device according to Claim 1 or 2, **characterized in that** at least one recess (52', 62') is provided in a substantially central region of the base unit (26').

4. Linear guide device according to one of Claims 1 to 3, **characterized in that** a plurality of circulating assemblies (32a1', 32a2', 32b1', 32b2') which are arranged behind one another in the guide direction are provided on the guide carriage (18').

5. Linear guide device according to one of Claims 1 to 4, **characterized in that** the circulating assemblies (32a, 32b; 32a1', 32a2', 32b1', 32b2') are produced, preferably injection-moulded, at least partially from plastic.

6. Linear guide device according to one of Claims 1 to 5, **characterized in that** the circulating assembly (32a, 32b; 32a1', 32a2', 32b1', 32b2') comprises a loadbearing wall section (42) of the running channel (39; 39'), which wall section (42) is produced from metal.

7. Linear guide device according to one of Claims 1 to 6, **characterized in that** each circulating assembly (32a, 32b; 32a1', 32a2', 32b1', 32b2') has a plurality of fastening mandrels (34) which engage into openings (36) of the base unit (26; 26') and the end regions of which can be deformed for riveting of the circulating assembly (32a, 32b; 32a1', 32a2', 32b1', 32b2') to the base unit (26; 26').

8. Linear guide device according to Claim 7, **characterized in that** the fastening mandrels (34) are formed from plastic.

9. Linear guide device according to one of Claims 1 to 8, **characterized in that** each circulating assembly (32a, 32b; 32a1', 32a2', 32b1', 32b2') comprises a main part (48; 48') and two deflection inserts (50; 50').

10. Linear guide device according to Claim 9, **characterized in that** each of the deflection inserts (50; 50') is supported in the guide direction firstly on an end face (54; 54', 64a', 64b') of the base unit (26; 26') and secondly on a fastening mandrel (34) and/or a terminating wall of the main part of the circulating assembly (32a, 32b; 32a1', 32a2', 32b1', 32b2').

## Revendications

1. Dispositif de guidage linéaire (10 ; 10') comprenant un rail de guidage (14a, 14b) s'étendant dans une direction de guidage et un chariot de guidage (18 ; 18') guidé de manière déplaçable dans la direction de guidage sur le rail de guidage (14a, 14b) au moyen d'au moins deux circulations de corps de roulement (38 ; 38', 68'), les circulations de corps de roulement (38 ; 38', 68') comprenant un canal de circulation (38 ; 38') et une pluralité de corps de roulement (68') circulant dans le canal de circulation,
le canal de circulation comprenant un canal de roulement (39 ; 39') qui est limité d'une part par une piste de roulement de corps de roulement (40) réalisée sur le rail de guidage et d'autre part par une portion de paroi (52) du chariot de guidage (18) recevant la charge, et en outre un canal de retour (44) et deux canaux de déviation (46) reliant le canal de roulement (39 ; 39') au canal de retour (44), dans lesquels les corps de roulement (68') sont essentiellement sans charge, et
le chariot de guidage (18 ; 18') comprenant une unité de base (26 ; 26') et au moins deux modules de circulation (32a, 32b ; 32a1', 32a2', 32b1', 32b2') dans lesquels est reçue à chaque fois au moins une circulation de corps de roulement, et
les deux modules de circulation (32a, 32b ; 32a1', 32a2', 32b1', 32b2') sont réalisés de manière séparée l'un de l'autre et ne sont connectés l'un à l'autre que par le biais de l'unité de base (26 ; 26'), **caractérisé en ce qu'**au moins quatre évidements (52 ; 52', 62') sont prévus sur le chariot de guidage (18 ; 18'), lesquels présentent à chaque fois une face frontale (54 ; 54', 64a', 64b') s'étendant essentiellement perpendiculairement par rapport à la direction de guidage, sur laquelle est supporté l'un des modules de circulation (32a, 32b ; 32a1', 32a2', 32b1', 32b2') dans la direction de guidage, les faces frontales (54 ; 54', 64a', 64b') étant tournées dans des directions opposées depuis deux évidements (52 ; 52', 62') disposés sur un côté respectif du rail de guidage (14a, 14b).

2. Dispositif de guidage linéaire selon la revendication 1, **caractérisé en ce que** les évidements (52 ; 52', 62') sont prévus sur les deux extrémités de l'unité de base (26 ; 26').

3. Dispositif de guidage linéaire selon la revendication 1 ou 2, **caractérisé en ce qu'**au moins un évidement (52', 62') est prévu dans une région essentiellement centrale de l'unité de base (26').

4. Dispositif de guidage linéaire selon l'une quelconque des revendications 1 à 3, **caractérisé en ce que** plusieurs modules périphériques (32a1', 32a2', 32b1', 32b2') disposés les uns derrière les autres dans la direction de guidage sont prévus sur le chariot de guidage (18').

5. Dispositif de guidage linéaire selon l'une quelconque des revendications 1 à 4, **caractérisé en ce que** les modules de circulation (32a, 32b ; 32a1', 32a2', 32b1', 32b2') sont fabriqués au moins partiellement en plastique, de préférence par moulage par injection.

6. Dispositif de guidage linéaire selon l'une quelconque des revendications 1 à 5, **caractérisé en ce que** le module de circulation (32a, 32b ; 32a1', 32a2', 32b1', 32b2') présente une portion de paroi (42) du canal de roulement (39 ; 39') recevant la charge fabriquée en métal.

7. Dispositif de guidage linéaire selon l'une quelconque des revendications 1 à 6, **caractérisé en ce que** chaque module de circulation (32a, 32b ; 32a1', 32a2', 32b1', 32b2') présente plusieurs mandrins de fixation (34) qui viennent en prise dans des ouvertures (36) de l'unité de base (26 ; 26') et dont les régions d'extrémité peuvent être déformées pour le rivetage du module de circulation (32a, 32b ; 32a1', 32a2', 32b1', 32b2') à l'unité de base (26 ; 26').

8. Dispositif de guidage linéaire selon la revendication 7, **caractérisé en ce que** les mandrins de fixation (34) sont fabriqués en plastique.

9. Dispositif de guidage linéaire selon l'une quelconque des revendications 1 à 8, **caractérisé en ce que** chaque module de circulation (32a, 32b ; 32a1', 32a2', 32b1', 32b2') comprend une partie principale (48 ; 48') et deux inserts de déviation (50 ; 50').

10. Dispositif de guidage linéaire selon la revendication 9, **caractérisé en ce que** chacun des inserts de déviation (50 ; 50') s'appuie dans la direction de guidage d'une part sur une face frontale (54 ; 54', 64a', 64b'), de l'unité de base (26 ; 26') et d'autre part sur un mandrin de fixation (34) et/ou une paroi de terminaison de la partie principale du module de circulation (32a, 32b ; 32a1', 32a2', 32b1', 32b2').
